# EUROPEAN PATENT SPECIFICATION

(11) **EP 3 898 324 B1**
(45) Date of publication and mention of the grant of the patent: **14.12.2022**
(21) Application number: 19839136.9
(22) Date of filing: 19.12.2019
(51) Int. Cl.: B60N 3/00, B60N 2/427, B60N 2/42, B61D 37/00

(54) **A TABLE FOR MEANS OF TRANSPORT**
EIN TISCH FÜR REISEMITTEL
UNE TABLE POUR MOYENS DE TRANSPORT

(30) Priority: 21.12.2018 IT 201800020806
(43) Date of publication of application: 27.10.2021
(73) Proprietor: LCI ITALY S.R.L., 50026 San Casciano Val di Pesa (FI) (IT)
(72) Inventor: PINZAUTI, Francesco, 50067 Rignano sull'Arno (FI) (IT)
(74) Representative: Pietri, Simona
(86) International application number: PCT/IB2019/061084
(87) International publication number: WO 2020/128940

(56) References cited:
- EP-A1- 2 574 518
- AU-B2- 657 468
- DE-U1- 9 206 638
- FR-A1- 2 994 410

## Description

### Technical field of the invention

The present invention relates to a table for a means of transport used for the transport of passengers, which installs a shock energy absorption system.

Specifically, the present invention relates to a table for a railway carriage.

### Background of the invention

As is known, some means of public transport, such as, for example, railway carriages, are equipped with seats for passengers, which are frequently associated with support tables.

A typical fitting in the railway sector is a fitting formed by four seats for an equal number of passengers, arranged in pairs facing opposite sides of a table, thus, placed centrally to the group of seats. According to known configurations, the table can be connected rigidly to the side wall of the carriage and extend in a cantilever fashion therefrom, towards the central aisle where passengers walk. If necessary, in other configurations of the traditional type, the table can be provided with a further floor rest/support, represented by a leg placed at the free end of the table, i.e. the end closest to the aisle.

Although, as stated previously, this type of fitting is widely used, despite having a number of critical aspects regarding the arrangement of the table in a frontal position to the seats. In fact, in the event of a sudden braking or impact, the sitting passenger is subjected to a strong acceleration, which can push him/her against the edge of the table.

At high speed, the impact with the edge of the table can cause the passenger lesions, also extremely serious ones, even resulting in death.

With a view to increasing passenger safety, thus, the need is felt to revise the fitting of the means of transport so that it too can contribute to the absorption of a part of shock energy, reducing the damage caused by the impact on the passenger.

FR2994410 describes a table which includes a peripheral band compressible under the effect of the movement of a rigid insert located within the table which is mobile in reaction to an impact action exerted on the table. In summary, when the table is hit, the insert moves in the opposite direction to the impact force, going to push on the band and compressing it; the movement of this mobile mass therefore absorbs part of the kinetic energy caused by the impact.

EP2574518 describes a shock absorption mechanism for a table to be used in public transport. In this document, the shock absorption mechanism creates a circular movement of the table when it is hit.

The known systems are not fully satisfying from a safety and effective impact absorption point of view; moreover, they are particularly complex from a constructive point of view. In general, these known systems do not fully meet the needs of the sector.

### Summary of the invention

Thus, the present invention falls into this state of affairs and has the object of satisfying this contingent need to increase passenger safety.

In particular, it is an object of the present invention to provide a table for means used for the transport of passengers, which is both capable of absorbing part of the shock energy of a passenger, thrown thereagainst at high speed as a result of an impact of the means, an accident or sudden braking.

Thus, it is an object of the table according to the invention to reduce the risk of serious and/or permanent damage to passengers in the event of an accident or impact or sudden braking.

### Brief description of the drawings

The characteristics and advantages of the table for a means of transport used for the transport of passengers according to the present invention will become clearer from the following description of an embodiment thereof, given by way of a non-limiting example, with reference to the accompanying figures, wherein:

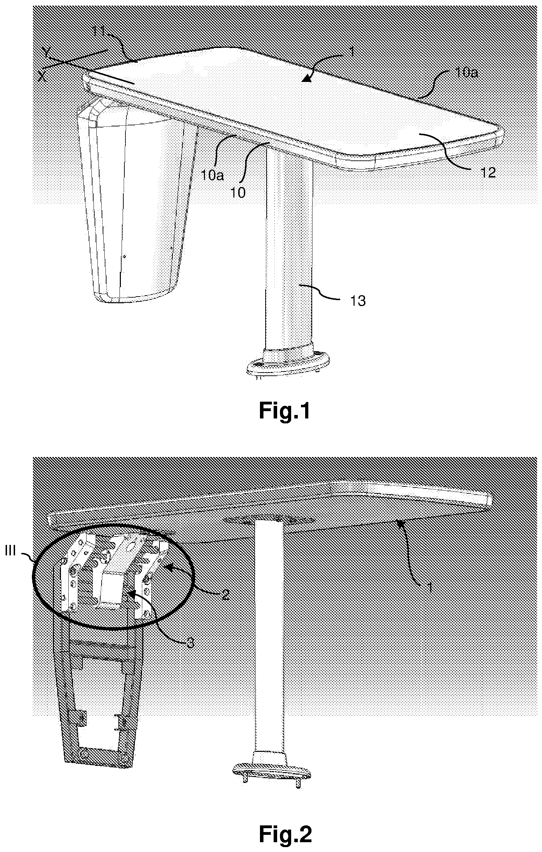

- Figure 1 shows a perspective view of a first embodiment of the table according to the invention;
- Figure 2 is a view of the table in figure 1 highlighting an infrastructure for connecting a table top to the side wall of the means of transport;

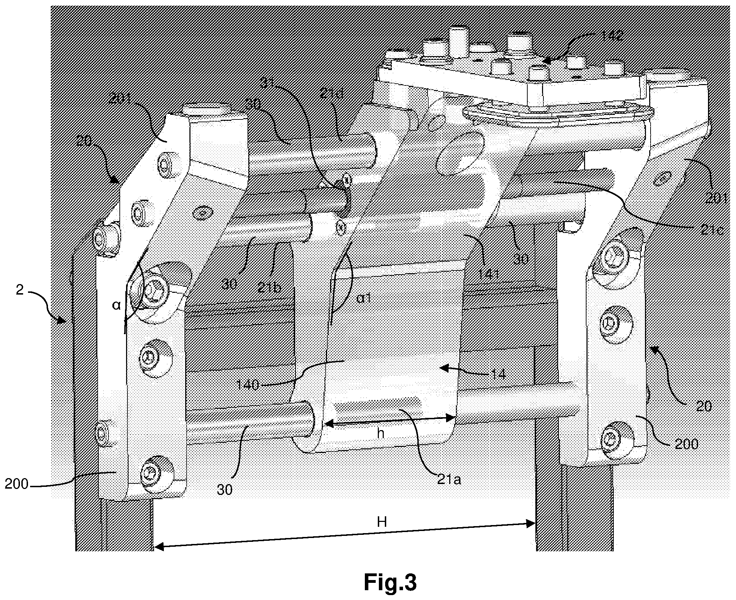

- Figure 3 shows an enlarged shock energy absorption device individually, without the table top, identified by the circle denoted with reference III in figure 2;
- Figure 4 relates to a second embodiment of the invention and shows a perspective view from above of a table top (against the light) and a shock energy absorption device associated therewith; and
- Figure 5 shows the table in figure 4, in an after-shock configuration, with the shock energy absorption device in an after-shock position, with the energy absorption device activated.

### Detailed description of the invention

With reference to the aforesaid figures, a table according to the invention comprises a table top 1, which has the function of a support plane for the passengers sitting in the one or more seats (not shown) facing the table.

The means of transport has a prevalent development according to an axis X, which is also an axis defining the direction of travel of the means.

The table top 1 is constrained to the frame of the means of transport through a connection infrastructure 2, in turn, integral with the frame.

Again, the table top defines a plane XY, where Y is a direction perpendicular to the axis X. The plane XY is substantially parallel to the walking surface of the means of transport.

The table top 1 further defines a peripheral edge 10, in turn, comprising two larger sides 10a, in use, facing the seats and consequently the passengers sitting therein.

In a preferred embodiment, the table top 1 is supported, in a cantilever fashion, by a side wall of the frame. Thus, with respect thereto, the table top 1 defines a first end or proximal end 11 at which the connection is made, in a cantilever fashion, with the side wall and an opposite or free distal end 12.

Possibly, in some embodiments a further floor support may be comprised, made from a leg 13, placed at the aforesaid distal end 12. A configuration of this type is shown in the figures, with the leg 13 arranged in a substantially perpendicular position to the table top 1.

In greater detail, the table according to the invention is such that the table top 1 is connected slidably according to the axis X with respect to the infrastructure 2.

The table according to the invention further comprises a shock energy absorption device 3.

Such device is functionally interposed between the table top and the infrastructure 2 for connecting the table top 1 to the frame of the carriage.

The shock energy absorption device 3 is such as to block the sliding movement between the table top and the infrastructure in the case of conditions of normal use, while if an impulsive force applied to the table top 1 ensues, with a component on the axis X, greater than a predefined threshold value, it reacts in a controlled manner to allow a relative movement between the table top and infrastructure according to the axis X.

In further detail, by conditions of normal use, we mean a condition in which no impulsive force is applied to the table top 1; while, if an impulsive force is exerted on the table top, where such impulsive force has a component according to the axis X having a value, which is greater than a predefined threshold value, then the shock absorption device reacts in a controlled manner, allowing the relative sliding between the table top 1 and infrastructure 2.

Such impulsive force applied to the table top is realised, for example, and in a particular manner in the case of an impact of the means of transport or sudden braking and it is exerted by the passenger sitting in the seat facing the table top, who, by effect of the impact or braking, undergoes an acceleration in the direction of the table in front thereof and violently hits the table top i.e. the peripheral edge 10 thereof. The direction of the impulsive force generated by a similar impact is usually coaxial to the axis X (in fact, consistent with the direction of travel).

However, if the passenger adopts unconventional sitting positions or is standing in areas adjacent to the table (for example, along a gangway) the impact can also develop in a direction, which is not perfectly concordant with the axis X. In this case, the force of the impact exerted on the table has a component along the axis X and if such component exceeds the predefined threshold value, the shock absorption device 2 is activated, as described above.

Such predefined threshold value is calculated according to several variables, such as the type of environment surrounding the table (for example, the type and/or number of seats facing thereto), the distance between the seat/s and the table, the type of means of transport, the maximum speed reached by the means of transport, etc.

In the solution applied to railway carriages, with respect to a standard fitting environment with four seats facing opposite pairs around the table top 1, such predefined threshold value is comprised, for example, in a range between 5-10 kN.

Now, in further detail, the shock energy absorption device 3 comprises at least one plastically deformable element by effect of said impulsive force applied to the table top 1 and at least one damping element having an elastic response behaviour under the action of said impulsive force, i.e. with respect to the component according to the axis X of said impulsive force.

According to the above, such at least one deformable element and such at least one damping element have a response behaviour according to the axis X.

Now refer to figures from 1 to 3, showing a first embodiment of the invention described above. In this particular case, the table top 1 is constrained to a side wall of the means of transport through the infrastructure 2, which comprises two mounting brackets 20. These are integral with the side wall (defining a plane on which the axis X lies) and arranged parallel and reciprocally spaced apart along the axis X by a distance H. Connection linear guiding means 21 are arranged, according to the axis X, between the mounting brackets 20. The table top 1 is integral with a carriage member 14, which slidably engages on the linear guiding means 21. Therefore, such sliding engagement along the axis X between the carriage member 14 and linear guiding means 21 makes the sliding connection between the table top 1 and the infrastructure 2. The carriage member 14 has a width h, measured along the axis X, being H>h.

The linear guiding means 21 comprise, for example, at least one rod. Again, in the solution shown in the figures, the linear guiding means 21 comprise a plurality of rods 21, arranged reciprocally so as to prevent the relative rotation between the carriage member 14 and mounting brackets 20 and to realise a constraint between the two with a single degree of freedom along the axis X.

In the case of the specific example, the mounting brackets 20 are V-shaped, defining a first arm 200 for connecting to the frame of the means of transport, and a second arm 201, which is inclined with respect to the first of an angle α. The carriage member 14 has a similar shape, with a first branch 140 interposed between the two first arms 200 of the mounting brackets 20 and a second branch 141, which is inclined with respect to the first arm by an angle α1, where the second branch 141 of the carriage member is arranged substantially in a position interposed between the two second arms of the mounting brackets 20. Preferably, but not restrictively α = α1.

The second branch 141 of the carriage member 14 supports, at the free end thereof, a strip 142 for connecting to the table top 1. The strip 142 is arranged parallel to the walking surface of the means, i.e. according to the aforesaid plane XY.

The connection of the table top 1 on the strip 142 is obtained in a traditional manner, for example, but not restrictively, with threaded or clamp connections.

In the example being described the linear guiding means are realised by a plurality of rods, connected to the first and second arms of the mounting brackets 20. In further detail, by way of example, at least one rod connects the first arms 200 of the mounting brackets, while the other rods connect the second arms 201 of the mounting brackets 20. In the example in the figures from 1 to 3, there are four rods in total, including a lower one 21a, which connects the first arms 200 and three upper ones 21b, 21c and 21d respectively, which connect the second arms 201.

As described above, according to a particular aspect of the invention, a shock energy absorption device 3 is interposed between the table top 1 and infrastructure 2.

Such device comprises at least one plastically deformable element 30 and at least one damping element 31.

In the described example, such at least one deformable element 30 is realised from a tubular piece arranged coaxially to the guiding means 21. The tubular piece is made of a material suitable for undergoing a plastic deformation under the action of the impulsive force.

In one embodiment, such tubular piece is of the metallic type. Again, in one embodiment on a railway carriage, in a standard environment with four seats facing the table, such tubular piece is made of steel (for example, stainless steel of the type AISI300). If necessary, aluminium alloys can also be used (for example series 6000 or 7000) or magnesium or titanium alloys.

Considering an application, in which it is desirable to keep the carriage member 14 in an intermediate position between the mounting brackets 20, the tubular piece has a length equal to about (H-h)/2.

In the illustrated example, two deformable elements 30 are arranged coaxially on each guiding rod 21, each having a length equal to about (H-h)/2, placed at opposite sides of the carriage member 14. In this way, the carriage member 14 is kept in a central position to the two mounting brackets 200.

Nonetheless, embodiments may exist where the carriage member doesn't necessarily have to be kept in a central position between the mounting brackets (because, for example, on the opposite side there is a wall or the seat back of another seat). In this case, the length of each of the two tubular pieces can be different from the length described above of (H-h)/2, in the sense of upper or lower. If necessary, there can be embodiment solutions in which the carriage member 14 is completely behind one of the two mounting brackets, thus only one tubular piece will be used and it will have a length equal to about H-h.

Now, as for the damping element 31 this is realised, for example, but not restrictively, from a tubular piece made of an elastomeric material. It has the task of absorbing the initial impulse of the shock, damping the blow and reducing the initial impact. Instead, the remaining force component will be absorbed by the deformable element, which, by deforming will allow the relative movement between the table and the side wall of the carriage.

The elastomeric material is, for example, but not restrictively, neoprene, PET, or a metal foam (such as, for example aluminium).

The damping element is, for example, a tubular piece arranged coaxially to at least one 21c of the rods 21 and housed inside a transit channel 14a made through the carriage member 14 for the sliding connection with the rod 21c. Thus, such damping tubular piece has a length equal to the width of the carriage member h.

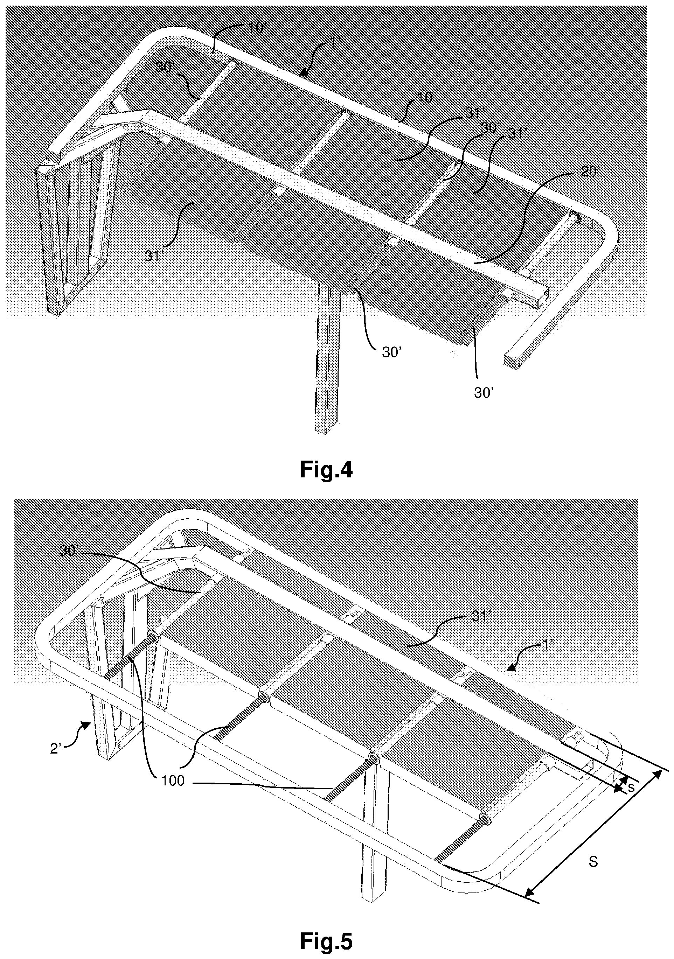

Now, figures 4 and 5 show a second embodiment. In this second embodiment, the table top 1' is engaged in a translatable manner according to the axis X on a beam 20', integral with the infrastructure 2 for connecting to the side wall of the frame of the means of transport. Such sliding engagement is obtained by means of a linear guide 100 integral with an inner face 10' of the peripheral edge 10 of the table top 1 and slidably engaged with the beam 20'. Such linear guiding means 100 are made, in the illustrated example, from a plurality of rods 100. At least one plastically deformable element 30' is associated with each rod 100. Advantageously, in a preferable configuration, two deformable elements 30' are associated with each rod 100, each having a length of at least (S-s)/2, S being the width according to the axis X of the table top and s being the width according to the axis X of the beam 20'.

Therefore, in such configuration, the deformable elements keep the table top in a central position to the beam 20'. Each deformable element is made from a tubular piece, arranged coaxially to the respective rod. In this case, too, like the first embodiment solution described above, the tubular piece is preferably made of a metallic-type material, such as, for example, but not restrictively steel (for example, stainless steel of the type AISI300). If necessary, aluminium alloys can also be used (for example series 6000 or 7000) or magnesium or titanium alloys.

The table top could also not arrange centrally to the beam, but moved sideways also applies to this embodiment and thus, the two deformable tubular pieces can have a different length from (S-s)/2 or there can also be only one tubular piece having a length substantially equal to S-s.

Again, at least one damping element 31' is comprised, interposed between the table top and infrastructure 2. In this case, the at least one damping element 31' is made from a block of elastomeric material arranged between the beam 20' and the inner face 10' of the peripheral edge 10.

Advantageously, the blocks of damping elements 31' can be more than one in number, arranged symmetrically to the beam 20'.

In this case, too, as in the previously described embodiment, the elastomeric material is, for example, but not restrictively, neoprene, PET or metal foams.

It is clear that other embodiments may be comprised; for example, solutions may be comprised, in which the connection of the table top is not made on the side wall of the means but with respect to the walking surface. Thus, in this case, the infrastructure 2 will make the connection between the walking surface and table top.

Again, in other embodiments, the damping element can be made from any element having an elastic response, such as a spring, or a hydraulic damper, or again, gas dampers.

Thus, the table according to the invention realises several advantages. In particular, it responds to the need, in a more than satisfactory manner, to absorb part of the impulsive force given by the impact of a passenger against the table. Consequently, such absorption results in a reduction of the opposing impact force generated on the passenger and thus of the damage, which the impact might have on the table.

Thus, the table according to the invention achieves the result of reducing the damage from the impact on the passenger in the event of an accident, impact or sudden braking of the means.

Such result is obtained on the basis of simple technical solutions, which do not complicate or substantially modify the general structure of the table.

Furthermore, they are solutions with a reduced volume, which can thus be applied to every environment.

As regards the second embodiment described, the entire shock absorption device is contained in the thickness of the table top, thus obtaining a further, significant reduction in volume.

As indicated, the table according to the invention can be adapted to any application on means used for the transport of passengers (such as, for example, buses, trams, boats, ships or similar); nonetheless, the application is preferred on railway carriages.

The present invention has been described with reference to a preferred embodiment thereof. It is understood that other embodiments may exist, relating to the same inventive principle, all coming under the scope of protection of the claims reported below.

## Claims

1. A table for a means of transport used for the transport of passengers, having a main development axis X corresponding to the travel direction, said table comprising:
- a table top (1) designed to be arranged, in use, parallel to a walking surface of said means of transport and in a position facing one or more seats used for the seating of passengers, wherein said table top (1) defines a plane (XY);
- an infrastructure (2) integral with a frame of said means of transport and used for connecting said table top (1) to said frame;
said table top (1) being slidably connected to said infrastructure (2) according to said axis (X), said table also comprising:
- a shock energy absorption device (3) functionally interposed between said table top (1) and said connecting infrastructure (2), such as to block, in normal use, the sliding movement of said table top (1) with respect to said infrastructure (2) and to react in a controlled manner, allowing the relative movement of said table top (1) with respect to said infrastructure to the effect of an impulsive force exerted on said table top (1) and having at least the dimension of the component measured along said axis (X) greater than a predefined threshold value, **characterized in that** said sliding connection between said table top (1) and said infrastructure (2) being obtained with linear guiding means (21, 100) arranged according to the axis (X).

2. A table according to claim 1, wherein said shock energy absorption device (2) comprises at least one plastically deformable element (30, 30') by effect of said impulsive force applied to said table top (1) and at least one damping element (31, 31') having an elastic response behaviour under the action of said impulsive force.

3. A table according to claim 2, wherein said at least one deformable element and at least one damping element have, in response to said impulsive force, a response behaviour directed according to the axis (X).

4. A table according to claim 2 or 3, wherein said at least one plastically deformable element (30) is associated with linear guiding means (21, 100).

5. A table according to claim 4, wherein said linear guiding means (21, 100) comprise at least one rod arranged according to said axis (X).

6. A table according to claim 5, wherein said at least one plastically deformable axis (30) is arranged coaxially to said at least one rod (21, 100).

7. A table according to any one of the preceding claims, wherein said damping element is made of an elastomeric material.

8. A table according to any one of the preceding claims, wherein said infrastructure (2) is suitable for being connected to a side wall of said frame of said transport means, said infrastructure comprising two mounting brackets (20) integral for the attachment to said side wall and arranged parallel to each other and reciprocally spaced apart along said axis (X) by a distance H, said connecting linear guiding means (21) being interposed between said mounting brackets; said table top (1) being integral with a carriage member (14), slidably engaged on said linear guiding means (21), said carriage member (14) having a width h, measured along the X axis, being H>h.

9. A table according to claim 8, wherein said at least one plastically deformable element associated with said linear guiding means (21), has a length at least equal to (H-h)/2.

10. A table according to claim 9, wherein said carriage member (14) is kept, in normal conditions of use, in a position interposed between said mounting brackets (21), said shock absorption device (2) thus comprising at least two elastically deformable elements arranged on said linear guiding means (21) on opposite sides of said carriage member (14).

11. A table according to any one of the preceding claims, wherein said damping element (30) is arranged coaxially to said linear guiding means.

12. A table according to any one of the claims from 6 to 11, wherein said damping element (31) is arranged coaxially around said at least one rod.

13. A table according to any one of the claims from 1 to 7, wherein said linear guiding means are connected to an inner edge of said table top (1') and are slidably engaged on a beam (20') of an infrastructure (2) for connecting to a side wall.

14. A table according to claim 13, wherein said damping element (31') is a block of elastomeric material arranged in the thickness of said table top (1') between said beam (20') and said inner edge (10').

15. A table according to claim 13 or 14, wherein said at least one plastically deformable element (30') is arranged coaxially to said linear guiding means, wherein said linear guiding means comprise a plurality of rods (100), such at least one deformable element having a length equal to at least (S-s)/2 S being the width of said table top according to the axis (X) and s being the width according to the axis (X) of said beam.

## Patentansprüche

1. Tisch für ein Transportmittel zur Personenbeförderung, mit einer Hauptverlaufsachse X, die der Fahrtrichtung entspricht, wobei der Tisch enthält:
- eine Tischplatte (1), die dafür ausgelegt ist, im Gebrauch parallel zu einer Lauffläche des Transportmittels und in einer Position angeordnet zu werden, die einem oder mehreren Sitzen zugewandt ist, die zum Sitzen von Passagieren verwendet werden, wobei die Tischplatte (1) eine Ebene (XY) definiert;
- eine Infrastruktur (2), die integral mit einem Rahmen des Transportmittels ist und zum Verbinden der Tischplatte (1) mit dem Rahmen verwendet wird;
wobei die Tischplatte (1) verschiebbar mit der Infrastruktur (2) gemäß der Achse (X) verbunden ist, wobei der Tisch auch enthält:
- eine Stoßenergieabsorptionsvorrichtung (3), die funktionell zwischen der Tischplatte (1) und der Verbindungsinfrastruktur (2) angeordnet ist, um bei normalem Gebrauch die Gleitbewegung der Tischplatte (1) in Bezug auf die Infrastruktur (2) zu blockieren und kontrolliert zu reagieren, indem die relative Bewegung der Tischplatte (1) in Bezug auf die Infrastruktur (2) auf die Wirkung einer impulsiven Kraft gestattet wird, die auf die Tischplatte (1) ausgeübt wird und mindestens die Dimension der entlang der Achse (X) gemessenen Komponente größer als ein vordefinierter Schwellenwert hat, **dadurch gekennzeichnet, dass** die Gleitverbindung zwischen der Tischplatte (1) und der Infrastruktur (2) mit linearen Führungsmitteln (21, 100) erhalten wird, die gemäß der Achse (X) angeordnet sind.

2. Tisch nach Anspruch 1, wobei die Stoßenergieabsorptionsvorrichtung (2) mindestens ein durch die auf die Tischplatte (1) ausgeübte Stoßkraft plastisch verformbares Element (30, 30') und mindestens ein Dämpfungselement (31, 31') enthält, das ein elastisches Ansprechverhalten unter der Wirkung der Impulskraft aufweist.

3. Tisch nach Anspruch 2, wobei das mindestens eine verformbare Element und das mindestens eine Dämpfungselement ein auf die Impulskraft ansprechendes gemäß der Achse (X) gerichtetes Ansprechverhalten aufweisen.

4. Tisch nach Anspruch 2 oder 3, wobei dem mindestens einen plastisch verformbaren Element (30) Linearführungsmittel (21, 100) zugeordnet sind.

5. Tisch nach Anspruch 4, wobei die linearen Führungsmittel (21, 100) mindestens eine entlang der Achse (X) angeordnete Stange enthalten.

6. Tisch nach Anspruch 5, wobei die mindestens eine plastisch verformbare Achse (30) koaxial zu der mindestens einen Stange (21, 100) angeordnet ist.

7. Tisch nach einem der vorangehenden Ansprüche, wobei das Dämpfungselement aus einem Elastomermaterial hergestellt ist.

8. Tisch nach einem der vorangehenden Ansprüche, wobei die Infrastruktur (2) dazu geeignet ist, mit einer Seitenwand des Rahmens des Transportmittels verbunden zu werden, wobei die Infrastruktur zwei Befestigungsklammern (20) enthält, die integral für die Befestigung an der Seitenwand und parallel zueinander und reziprok entlang der Achse (X) um einen Abstand H beabstandet angeordnet sind, wobei die verbindenden linearen Führungsmittel (21) zwischen den Befestigungsklammern angeordnet sind; wobei die Tischplatte (1) integral mit einem Schlittenelement (14) ist, das verschiebbar an den linearen Führungsmitteln (21) angreift, wobei das Schlittenelement (14) eine entlang der X-Achse gemessene Breite h von H > h hat.

9. Tisch nach Anspruch 8, bei dem das zumindest eine plastisch verformbare Element, das den linearen Führungsmitteln (21) zugeordnet ist, eine Länge aufweist, die zumindest gleich (H-h)/2 ist.

10. Tisch nach Anspruch 9, wobei das Schlittenelement (14) unter normalen Gebrauchsbedingungen in einer Position gehalten wird, die zwischen den Befestigungsklammern (21) liegt, wobei die Stoßabsorptionsvorrichtung (2) somit mindestens zwei elastisch verformbare Elemente aufweist, die an den linearen Führungsmitteln (21) auf entgegengesetzten Seiten des Schlittenelements (14) angeordnet sind.

11. Tisch nach einem der vorhergehenden Ansprüche, wobei das Dämpfungselement (30) koaxial zu den linearen Führungsmitteln angeordnet ist.

12. Tisch nach einem der Ansprüche 6 bis 11, wobei das Dämpfungselement (31) koaxial um die mindestens eine Stange herum angeordnet ist.

13. Tisch nach einem der Ansprüche 1 bis 7, wobei die linearen Führungsmittel mit einem Innenrand der Tischplatte (1') verbunden sind und gleitend an einem Träger (20') einer Infrastruktur (2) zum Anschluss an eine Seitenwand eingreifen.

14. Tisch nach Anspruch 13, wobei das Dämpfungselement (31') ein Block aus elastomerem Material ist, der in der Dicke der Tischplatte (1') zwischen dem Träger (20') und dem Innenrand (10') angeordnet ist.

15. Tisch nach Anspruch 13 oder 14, wobei das mindestens eine plastisch verformbare Element (30') koaxial zu den linearen Führungsmitteln angeordnet ist, wobei die linearen Führungsmittel mehrere Stangen (100) enthalten, wobei dasselbige mindestens eine verformbare Element eine Länge hat, die mindestens gleich (S-s)/2 ist, wobei S die Breite der Tischplatte gemäß der Achse (X) ist und s die Breite des Balkens gemäß der Achse (X) ist.

## Revendications

1. Table pour moyens de transport utilisés pour le transport de passagers, ayant un axe de développement principal X correspondant à la direction de déplacement, ladite table comprenant :
- un plateau de table (1) conçu pour être agencé, en utilisation, parallèlement à une surface de déplacement desdits moyens de transport et dans une position faisant face à un ou plusieurs sièges utilisés pour l'assise de passagers, I ledit plateau de table (1) définissant un plan (XY) ;
- une infrastructure (2) solidaire d'un châssis desdits moyens de transport et utilisée pour relier ledit plateau de table (1) audit châssis ; ledit plateau de table (1) étant relié de manière coulissante à ladite infrastructure (2) selon ledit axe (X), ladite table comprenant également :
- un dispositif d'absorption d'énergie de choc (3) interposé fonctionnellement entre ledit plateau de table (1) et ladite infrastructure de connexion (2), de manière à bloquer, en utilisation normale, le mouvement de coulissement dudit plateau de table (1) par rapport à ladite infrastructure (2) et à réagir de manière contrôlée, permettant le mouvement relatif dudit plateau de table (1) par rapport à ladite infrastructure sous l'effet d'une force d'impulsion exercée sur ledit plateau de table (1) et ayant au moins une composante mesurée selon ledit axe (X) d'une intensité supérieure à une valeur seuil prédéfinie, **caractérisée en ce que** ladite connexion en glissement entre ledit plateau de table (1) et ladite infrastructure (2) est obtenue avec des moyens de guidage linéaire (21,100) agencés selon l'axe (X).

2. Une table selon la revendication 1, dans laquelle ledit dispositif d'absorption d'énergie de choc (2) comprend au moins un élément déformable plastiquement (30, 30') sous l'effet de ladite force d'impulsion appliquée audit plateau de table (1) et au moins un élément d'amortissement (31, 31') ayant un comportement de réponse élastique sous l'action de ladite force d'impulsion.

3. Une table selon la revendication 2, dans laquelle ledit au moins un élément déformable et ledit au moins un élément amortisseur ont, en réponse à ladite force d'impulsion, un comportement de réponse dirigé selon l'axe (X).

4. Une table selon l'une des revendications 2 et 3, dans laquelle ledit au moins un élément déformable plastiquement (30) est associé à des moyens de guidage linéaire (21, 100).

5. Une table selon la revendication 4, dans laquelle lesdits moyens de guidage linéaire (21, 100) comprennent au moins une tige agencée selon ledit axe (X).

6. Une table selon la revendication 5, dans laquelle ledit au moins un axe déformable plastiquement (30) est agencé de façon coaxiale avec ladite au moins une tige (21, 100).

7. Une table selon l'une quelconque des revendications précédentes, dans laquelle ledit élément amortisseur est constitué d'un matériau élastomère.

8. Une table selon l'une quelconque des revendications précédentes, dans laquelle ladite infrastructure (2) est appropriée pour être raccordée à une paroi latérale dudit châssis desdits moyens de transport, ladite infrastructure comprenant deux brides de montage (20) solidairement fixées à ladite paroi latérale et agencées parallèlement l'une par rapport à l'autre et espacées réciproquement le long dudit axe (X) d'une distance H, lesdits moyens de guidage linéaire de raccordement (21) étant interposés entre lesdites brides de montage ; ledit plateau de table (1) étant solidaire d'un élément de chariot (14), monté coulissant sur lesdits moyens de guidage linéaire (21), ledit élément de chariot (14) ayant une largeur h, mesurée le long de l'axe X, avec H>h.

9. Une table selon la revendication 8, dans laquelle ledit au moins un élément déformable plastiquement associé auxdits moyens de guidage linéaire (21) a une longueur au moins égale à (H-h)/2.

10. Une table selon la revendication 9, dans laquelle ledit élément de chariot (14) est maintenu, dans des conditions normales d'utilisation, dans une position interposée entre lesdits brides de montage (21), ledit dispositif d'absorption de choc (2) comprenant ainsi au moins deux éléments élastiquement déformables agencés sur lesdits moyens de guidage linéaire (21) de part et d'autre dudit élément de chariot (14).

11. Une table selon l'une quelconque des revendications précédentes, dans laquelle ledit élément amortisseur (30) est agencé de façon coaxiale avec lesdits moyens de guidage linéaire.

12. Une table selon l'une quelconque des revendications 6 à 11, dans laquelle ledit élément amortisseur (31) est agencé de façon coaxiale autour de ladite au moins une tige.

13. Une table selon l'une quelconque des revendications 1 à 7, dans laquelle lesdits moyens de guidage linéaire sont reliés à un bord intérieur dudit plateau de table (1') et coopèrent de manière coulissante avec une poutre (20') d'une infrastructure (2) pour une connexion à une paroi latérale.

14. Une table selon la revendication 13, dans laquelle ledit élément amortisseur (31') est un bloc de matériau élastomère agencé dans l'épaisseur dudit plateau de table (1') entre ladite poutre (20') et ledit bord intérieur (10').

15. Une table selon l'une des revendications 13 et 14, dans laquelle ledit au moins un élément plastiquement déformable (30') est agencé de façon coaxiale avec lesdits moyens de guidage linéaire, dans laquelle lesdits moyens de guidage linéaire comprennent une pluralité de tiges (100), ledit au moins un élément déformable ayant une longueur égale à au moins (S-s)/2, S étant la largeur dudit plateau selon l'axe (X) et s étant la largeur selon l'axe (X) de ladite poutre.
